**Europäisches Patentamt**

**European Patent Office**

**Office européen des brevets**

(19)

(11) Veröffentlichungsnummer: **0 061 223**
**B1**

(12)

# EUROPÄISCHE PATENTSCHRIFT

(45) Veröffentlichungstag der Patentschrift:
13.02.85

(51) Int. Cl.⁴: **C 09 D 17/00** // C09D5/10

(21) Anmeldenummer: 82200310.9

(22) Anmeldetag: 10.03.82

(54) **Pigment.**

(30) Priorität: 23.03.81 DE 3111299

(43) Veröffentlichungstag der Anmeldung:
29.09.82 Patentblatt 82/39

(45) Bekanntmachung des Hinweises auf die Patenterteilung:
13.02.85 Patentblatt 85/7

(84) Benannte Vertragsstaaten:
AT CH DE FR GB IT LI NL

(56) Entgegenhaltungen:
AT - B - 326 794
DE - A - 2 309 095
DE - A - 2 355 395

(73) Patentinhaber: **Metalon Stolberg GmbH,
Cockerillstrasse 69, D-5190 Stolberg (DE)**

(72) Erfinder: **Der Erfinder hat auf seine Nennung verzichtet**

(74) Vertreter: **Fischer, Ernst, Dr., Reuterweg 14,
D-6000 Frankfurt am Main 1 (DE)**

**0 061 223**

**Beschreibung**

Die Erfindung betrifft ein Pigmentgemisch für Korrosionsschutz-Anstrichmittel auf der Basis von Alkydharzen, Epoxiesterharzen, Phenolharzen, Polyurethan, Polyvinylharzen, Epoxidharz, Silikonharzen, Methylsilikatbindemitteln, Alkalisilikat-Bindemitteln, trocknenden Ölen, Chlorkautschuk oder Cyclokautschuk.

Als Korrosionsschutz für Eisen und Stahl werden seit vielen Jahren Anstrichmittel verwendet, die Pigmente zum anodischen Schutz durch Passivierung enthalten, wobei neben Bleimennige und Zinkstaub, insbesondere auch Chromatpigmente, wie Zinkkaliumchromat, Strontiumchromat Bleisilicochromat, eingesetzt werden. Nach neueren Erkenntnissen besitzen Chromatpigmente jedoch gesundheitsschädliche Nebenwirkungen, so daß seit kurzem eine Kennzeichnung der Chromatpigmente enthaltenden Korrosionsschutz-Anstrichmittel durch den Hinweis »Vorsicht, enthält krebserregende Stoffe« erforderlich ist.

Deshalb sind die Hersteller von Chromatpigmente enthaltenden Korrosionsschutz-Anstrichmitteln bestrebt, die Chromatpigmente durch unschädlichere Pigmente zu ersetzen, wobei aber wenigstens die gleichen guten Eigenschaften, die die chromathaltigen Pigmente enthaltenden Korrosionsschutz-Anstrichmittel aufweisen, erreicht werden sollen. Es müssen also bei einem Ersatz des Chromatpigments durch andere Pigmente die besonderen Eigenschaften, die Chromatpigmente zum Schutz der metallischen Unterlage besitzen, weitgehend erzeugt werden. Auch die reinen Pigmenteigenschaften sollen durch den Ersatz des Chromatpigments durch ein anderes Pigment nicht verschlechtert, sondern möglichst beibehalten werden; d. h., daß das als Ersatz vorgesehene Pigment sich ebenso leicht wie chromathaltiges Pigment benetzen und dispergieren lassen sollte.

Die Lösung dieses Problems ist ein Pigmentgemisch aus 45 bis 63 Gew.-% von einem oder mehreren der metalloxidischen Pigmente, Eisenoxid, Titanoxid oder Chromoxidgrün, 17 bis 26 Gew.-% Zinkstaub und 19 bis 28 Gew.-% von einem oder mehreren der Füllstoffe inerter plättchenförmiger Pigmente, Mikrotalkum, Schiefer, Zink und/oder chemisch inaktive körnige Pigmente, Schwerspat und Feinsände mit einer Korngröße von 0,5 bis 3,5 μm.

Der Ersatz des Chromatpigments durch die Mischung aus einem oder mehreren metalloxidischen Pigmenten mit Zinkstaub ergibt nicht nur bezüglich des Korrosionsschutzes eine gleichwertige Wirkung, sondern es wird gleichzeitig auch eine anstrichtechnische Verbesserung, d. h. problemlosere Verarbeitung erzielt.

Beide Füllstoffpigmente können im unterschiedlichen Mischungsverhältnis in dem erfindungsgemäßen Pigmentgemisch enthalten sein.

Von dem metalloxidischen Pigment können 10 bis 18 Gew.-% durch gleiche Mengen Zinkoxid ersetzt sein.

Eine vorzugsweise Zusammensetzung des erfindungsgemäßen Mischpigments besteht aus 10 bis 18 Gew.-% Zinkoxid, 17 bis 26 Gew.-% Zinkstaub, 35 bis 45 Gew.-% metalloxidische Pigmente, 19 bis 28 Gew.-% Füllstoff.

Das erfindungsgemäß zusammengesetzte Mischpigment kann mit Ausnahme von säurehärtenden Systemen, allen Harzen, wie Alkydharzen, Epoxiesterharzen, Phenolharzen, Polyurethan-Polyvinylharzen, Silikonharzen, Methyl-Silikatbindemitteln, Alkalisilikat-Bindemitteln, Epoxidharz sowie trocknenden Ölen, Chlorkautschuk, Cyclokautschuk oder dergleichen zugesetzt sein. Gegebenenfalls kann das Mischpigment auch in Pulverlacken Verwendung finden.

Im folgenden sind die Untersuchungsergebnisse von Vergleichstests an mit einem Korrosionsschutz-Anstrichmittel auf Epoxiharzester-Basis, das nach dem Stand der Technik ein Pigment aus 50% Zink-Kalium-Chromat, 20% Schwerspat, 8% Eisenoxid und 22% Mikrotalkum enthielt und an mit einem Korrosionsschutzmittel auf Epoxiharzester-Basis, dem das erfindungsgemäß zusammengesetzte Pigment mit 14% Zinkoxid, 23% Zinkstaub, 41% Eisenoxid, 20% Mikrotalkum und 2% Schwerspat zugesetzt war, 80 μm dick beschichteten sandgestrahlten Stahlplatten dargestellt. Die Auswertung der Tests erfolgte nach:

- DIN 53 209  Blasenbildung
- DIN 53 210  Bezeichnung des Rostgrades
- DIN 53 151  Gitterschnittprüfung

2

# 0 061 223

|  | Stand der Technik | Erfindung |
|---|---|---|
| Außenbewitterungstest 3 Jahre | gut | gut |
| Unterwasserbeständigkeitstest 5 Monate | befriedigend | gut |
| Schwitzwassertest (100% relative Luftfeuchtigkeit, Ø 25° C) 5 Monate | gut | gut |
| Laborbeckentest (Leitungswasser, 0,3% NaCl, kontinuierliche Lufteinperlung) 5 Monate | gut | gut |
| Salzsprühtest 500 Stunden | befriedigend | gut |

Erläuterung für die angeführten Güteklassen:

»gut«: leichte Veränderung, z. B. vereinzelte Griesbläschen nach DIN 53 209, Rostgrad 0—2 nach DIN 53 210 und GT 1—2 nach DIN 53 151,

»befriedigend«: merkliche Veränderungen, z. B. Griesbläschenbildung nach DIN 53 209, Rostgrad 2—3 nach DIN 53 210 und GT 2—3 nach DIN 53 151.

Die vergleichende Gegenüberstellung zeigt, daß das Korrosionsschutz-Anstrichmittel, dem das erfindungsgemäß zusammengesetzte Pigment zugesetzt ist, bessere Eigenschaften als das Korrosionschutz-Anstrichmittel besitzt, das ein chromathaltiges Pigment enthält.

## Patentansprüche

1. Pigment für Korrosionsschutz-Anstrichmittel auf der Basis von Alkydharzen, Epoxiesterharzen, Phenolharzen, Polyurethan, Polyvinylharzen, Epoxidharz, Silikonharzen, Methylsilikatbindemitteln, Alkalisilikat-Bindemitteln, trocknenden Ölen, Chlorkautschuk oder Cyclokautschuk, gekennzeichnet durch ein Gemisch aus 45 bis 63 Gew.-% von einem oder mehreren der metalloxidischen Pigmente, Eisenoxid, Titanoxid oder Chromoxidgrün, 17 bis 26 Gew.-% Zinkstaub und 19 bis 28 Gew.-% von einem oder mehreren der Füllstoffe inerter plättchenförmiger Pigmente, Mikrotalkum, Schiefer, Zink und/oder chemisch inaktive körnige Pigmente, Schwerspat und Feinsände mit einer Korngröße von 0,5 bis 3,5 µm.

2. Pigment nach Anspruch 1, dadurch gekennzeichnet, daß 10 bis 18 Gew.-% an metalloxidischem Pigment durch die gleiche Menge Zinkoxid ersetzt sind.

## Claims

1. A pigment for anticorrosive paints on basis of alkyd resins, epoxy ester resins, phenolic resins, polyurethanes, polyvinyl resins, expoxy resin, silicone resins, bonding agents of methyl silicate, bonding agents of alkali silicate, drying oils, chlorinated rubber or cyclized rubber characterized in that said pigments consits of mixture containing 45 to 63%-by weight of one or more of the metallic oxide pigments ferric oxid, titanium oxide or chrome green and 17 to 26%-by weight of zinc and 19 to 28%-by weight of one or more of the fillers inert small-plated pigments, microtalc, slat, zinc and/or the chemically inactive grained pigments heavy spar and fine sands having a grain size of 0.5 to 3.5 µm.

2. A pigment according to claim 1 characterized in that 10 to 18%-by weight of the metallic oxide pigment is replaced by the same quantity of zinc oxide.

3

**0 061 223**

**Revendications**

1. Pigment pour composition de peinture de protection contre la corrosion à base de résines alkyde, de résines époxyester, de résines phénoliques, de polyuréthane, de résines polyvinyliques, de résine époxydique, de résines de silicone, d'agents liants au silicate de méthyle, d'agents liants au silicate de métal alcalin, d'huiles siccatives, de caoutchouc chloré ou de caoutchouc cyclique, caractérisé par un mélange de 45 à 63% en poids d'un ou de plusieurs des oxydes métalliques servant de pigment que sont l'oxyde de fer, l'oxyde de titane ou le vert de chrome, de 17 à 26% en poids de poussière des carneaux de four à zinc et de 19 à 28% en poids d'une ou de plusieurs des matières de charge de pigment inertes en forme de plaquettes que sont le talc microscopique, l'ardoise, le zinc et/ou des pigments en grains chimiquement inactifs, la baryte et les sables fins ayant une granulométrie de 0,5 à 3,6 μm.

2. Pigment suivant la revendication 1, caractérisé en ce que de 10 à 18% en poids de l'oxyde métallique constituant le pigment sont remplacés par la même quantité d'oxyde de zinc.